# EUROPÄISCHE PATENTSCHRIFT

(11) **EP 2 628 420 B1**
(45) Veröffentlichungstag und Bekanntmachung des Hinweises auf die Patenterteilung: **12.08.2015**
(21) Anmeldenummer: 13153822.5
(22) Anmeldetag: 04.02.2013
(51) Int. Cl.: A47J 31/00

(54) **Heißgetränkezubereitungsvorrichtung**
Hot beverage preparation device
Dispositif de préparation de boissons chaudes

(30) Priorität: 14.02.2012 DE 102012202184
(43) Veröffentlichungstag der Anmeldung: 21.08.2013
(73) Patentinhaber: BSH Hausgeräte GmbH, 81739 München (DE)
(72) Erfinder: Franzke, Peter, 83229 Sachrang/Aschau (DE); Huber, Michael, 6341 Ebbs (AT); Wölfler, Andreas, 5760 Saalfelden (AT)

(56) Entgegenhaltungen:
- EP-A1- 1 762 163
- EP-A1- 2 305 081
- WO-A1-2011/095147
- DE-A1- 10 210 161
- GB-A- 2 439 307

## Beschreibung

Die vorliegende Erfindung betrifft eine Heißgetränkezubereitungsvorrichtung, insbesondere eine Heißgetränkezubereitungsvorrichtung mit einem Gehäuse, einem Ausgabereich, der einen Getränkeauslauf zum Befüllen von zumindest einem Trinkgefäß aufweist, und zumindest einer an dem Gehäuse angeordneten Tür, die geöffnet werden kann, ohne den Getränkeauslauf mitzubewegen.

Es ist eine Vielzahl von Heißgetränkezubereitungsvorrichtungen auf dem Markt erhältlich. Insbesondere sind Heißgetränkezubereitungsvorrichtungen in Form von Kaffeevollautomaten bekannt, die üblicherweise unter anderem über zumindest ein Mahlwerk, zumindest eine Brüheinheit, einen Milchschäumer und einen Ausgabebereich mit einem Getränkeauslauf zum Befüllen von zumindest einem Trinkgefäß verfügen. Dabei ist es sowohl bei freistehenden derartigen Heißgetränkezubereitungsvorrichtungen als insbesondere auch bei Einbaugeräten, die dazu ausgebildet sind, z.B. in einem Schrank montiert zu werden, bekannt, die Heißgetränkezubereitungsvorrichtung mit einem Gehäuse auszubilden, an dem eine Tür angeordnet ist, die geöffnet werden kann. In dem Gehäuse kann hinter der Tür ein Wartungsbereich vorgesehen sein, auf den in regelmäßigen oder unregelmäßigen Abständen zugegriffen werden muss. Der Wartungsbereich kann dabei insbesondere Behälter für Verbrauchsmittel, wie insbesondere Kaffeebohnen, Milch, Wasser, etc. bei einem Kaffeevollautomaten, und Behälter für zu entsorgende Stoffe, wie insbesondere gebrauchtes Kaffeepulver, gebrauchte Reinigungsflüssigkeit, verschüttete Heißgetränkereste, etc. bei einem Kaffeevollautomaten, aufweisen. Insbesondere wenn die Heißgetränkezubereitungsvorrichtung als ein Einbaugerät realisiert ist, ist die Tür, die für einen Zugriff auf den Wartungsbereich geöffnet werden kann, üblicherweise an einer Frontseite des Gehäuses ausgebildet, an der auch ein Ausgabebereich mit einem Getränkeauslauf zum Befüllen von Trinkgefäßen vorgesehen ist, oder im Wesentlichen die gesamte Frontseite ist als Tür ausgebildet.

Um einen optisch ansprechenden Eindruck der Heißgetränkezubereitungsvorrichtung bereitzustellen und auch einen Betrieb der Heißgetränkezubereitungsvorrichtung unter ungünstigen Lichtverhältnissen komfortabel zu ermöglichen, ist es wünschenswert, zumindest einen Ausgabebereich für Heißgetränke zu beleuchten, sodass ein Nutzer z.B. auch im Dunkeln sicher ein zubereitetes Heißgetränk entnehmen kann. Dabei ist es wünschenswert, eine möglichst für die Entnahme des Heißgetränks optimierte Beleuchtungssituation bereitzustellen.

Bei Heißgetränkezubereitungsvorrichtungen mit einem Gehäuse und einem in dem Gehäuse angeordneten Wartungsbereich kann eine Vornahme von Wartungstätigkeiten, wie insbesondere ein Nachfüllen von Verbrauchsmitteln oder ein Entleeren von Behältern für zu entsorgende Stoffe, bei ungünstigen Lichtverhältnissen erschwert sein.

Die EP 1 762 163 A1 offenbart einen Getränkebereiter, insbesondere Kaffeeautomat, umfassend einen als Gehäuse ausgebildeten Korpus, der als separates Einzelteil oder als Einbauteil in einem Schrank ausgebildet ist, wobei die Gehäusefrontseite als Tür ausgebildet ist, in der ein Ausgabebereich zur Aufnahme eines Trinkgefäßes eingeformt ist, und wobei hinter der als Tür ausgebildeten Gehäusefrontseite in einem rückwärtigen Bereich die für die Getränkebereitung erforderlichen Behältnisse für die Vorsorge und Entsorgung angeordnet sind, und wobei der Ausgabebereich wenigstens über eine Beleuchtungseinrichtung verfügt, deren Lichtquelle den Ausgabebereich ausleuchtet. Die Beleuchtungseinrichtung ist derart an oder in dem Gehäuse angeordnet, dass der Lichtkegel der Lichtquelle sowohl den Ausgabebereich zumindest bei vollständig geschlossener Tür, als auch den rückwärtigen Bereich der Getränkebereitung zumindest bei vollständig geöffneter Tür ausleuchtet.

Die DE 102 10 161 A1 zeigt einen Getränkebereiter, insbesondere eine Kaffeemaschine, mit einem Korpus, mit einem an dem Korpus angeordneten Ausgabebereich zur Aufnahme eines Trinkgefäßes und mit einer Beleuchtungseinrichtung, wobei der Ausgabebereich wenigstens teilweise mittels der Beleuchtungseinrichtung ausleuchtbar ist, wobei die Beleuchtungseinrichtung eine in dem Inneren des Korpus angeordnete Lichtquelle und einen Lichtleiter aufweist, wobei das von der Lichtquelle ausgestrahlte Licht wenigstens teilweise durch den Lichtleiter in den Ausgabebereich leitbar ist.

Die WO 2011 095 147 A1 betrifft einen elektrischer Kaffeevollautomaten, bei dem zwei UV- Lichtquellen innerhalb des Gehäuses angeordnet sind, wobei die erste UV-Lichtquelle den Inhalt des Auffangbehälters und die zweite Lichtquelle die Innenseite der Auswurfklappe und Teile des Brühraumes der Brühgruppe bestrahlt.

Die GB 2439307 betrifft eine Getränkeabgabevorrichtung zur Abgabe eines flüssigen Getränkemischung mit einer Vergleichseinrichtung zum Ableiten eines Lichtabsorptions- oder Lichtübertragungs- oder BRIX-Werts der flüssigen Getränkemischung vor dem Getränkeabgabeausgang und zum Vergleichen des abgeleiteten Wertes mit einem vorbestimmten Ziel-Lichtabsorptions- oder -Lichtübertragungs- oder -Brix-Wert für die flüssige Getränkemischung, und eine Steuereinrichtung zur Steuerung der Mischeinrichtung in Abhängigkeit von der Differenz zwischen dem abgeleiteten Wert und dem vorbestimmten Ziel-Wert, um ein Verhältnis eines Getränkekonzentrats zu Wasser zu verändern.

Es ist Aufgabe der vorliegenden Erfindung, eine verbesserte Heißgetränkezubereitungsvorrichtung bereitzustellen, bei der in einfacher, kompakter und kostengünstiger Weise sowohl eine für eine Heißgetränkezubereitung optimierte Beleuchtungssituation als auch eine verbesserte Bedienung des Wartungsbereichs erreicht werden.

Die Aufgabe wird durch eine Heißgetränkezubereitungsvorrichtung nach Anspruch 1 gelöst. Vorteilhafte Weiterbildungen sind in den abhängigen Ansprüchen angegeben.

Die Heißgetränkezubereitungsvorrichtung weist auf: ein Gehäuse; einen Ausgabereich, der einen Getränkeauslauf zum Befüllen von zumindest einem Trinkgefäß aufweist; zumindest eine an dem Gehäuse angeordnete Tür, die geöffnet werden kann, ohne den Getränkeauslauf mitzubewegen; einen in dem Gehäuse angeordneten Wartungsbereich; und eine an dem Getränkeauslauf angeordnete Beleuchtungseinheit zur Beleuchtung des Ausgabebereichs, die derart angeordnet ist, dass sie bei geschlossener Tür den Ausgabebereich beleuchtet. Die Beleuchtungseinheit ist derart angeordnet, dass sie bei geöffneter Tür den Wartungsbereich beleuchtet.

Da die Beleuchtungseinheit an dem Getränkeauslauf derart angeordnet ist, dass sie bei geöffneter Tür den Wartungsbereich beleuchtet, wird bei einem Öffnen der Tür, um auf den Wartungsbereich zuzugreifen, eine Beleuchtung des Wartungsbereichs bereitgestellt, die eine komfortable Vornahme von Wartungstätigkeiten auch bei ungünstigen Umgebungslichtverhältnissen ermöglicht. Durch die Anordnung der Beleuchtungseinheit an dem Getränkeauslauf wird der Wartungsbereich dabei auch im Wesentlichen aus der Richtung beleuchtet, aus der der die Wartungstätigkeiten vornehmende Nutzer auf den Wartungsbereich blickt, sodass dieser nicht durch die Beleuchtungseinheit geblendet wird. Der Begriff Getränkeauslauf ist dabei im Rahmen der vorliegenden Beschreibung so zu verstehen, dass dieser auch eine dem Getränkeauslauf zugeordnete Abdeckung einschließt. Da die Beleuchtungseinheit sowohl für die Beleuchtung des Ausgabebereichs als auch für die Beleuchtung des Wartungsbereichs genutzt wird, ist eine kompakte und kostengünstige Ausgestaltung erreicht, die nur einen äußerst geringen Verdrahtungsaufwand erfordert. Es müssen insbesondere keine separaten Lichtquellen für den Wartungsbereich bereitgestellt werden und es muss keine Verkabelung über ein Scharnier der Tür erfolgen. Durch die Anordnung an dem Getränkeauslauf ist ferner erreicht, dass auch bei einem höhenverstellbaren Getränkeauslauf die Beleuchtungseinheit bei einer Höhenverstellung stets eine optimierte Beleuchtungssituation für den Ausgabebereich bereitstellt.

Gemäß einer Ausgestaltung weist die Beleuchtungseinheit eine an dem Getränkeauslauf angeordnete Lichtquelle auf. In diesem Fall kann die gesamte Beleuchtungseinheit kompakt an dem Getränkeauslauf realisiert werden und die Realisierung der Beleuchtung kann mit geringem Montageaufwand erfolgen.

Wenn die Lichtquelle zumindest eine LED aufweist ist eine sparsame Beleuchtung mit einer langen Lebensdauer ermöglicht.

Gemäß einer Ausgestaltung weist die Lichtquelle zumindest zwei LEDs auf, die derart angeordnet sind, dass sie in entgegengesetzten Richtungen abstrahlen. In diesem Fall kann eine besonders homogene und ansprechende Lichtverteilung erzielt werden. Die beiden LEDs können dabei bevorzugt auf derselben Platine angeordnet sein, sodass eine kompakte Realisierung gegeben ist. Die LEDs können insbesondere derart angeordnet sein, dass sie in entgegengesetzten im Wesentlichen horizontalen Richtungen abstrahlen.

Gemäß einer Ausgestaltung ist die Lichtquelle derart angeordnet, dass sie für einen die Heißgetränkezubereitungsvorrichtung bedienenden Nutzer nicht unmittelbar sichtbar ist. In diesem Fall ist sichergestellt, dass der Nutzer bei einer Bedienung der Heißgetränkezubereitungsvorrichtung nicht geblendet wird. Ferner wird in dieser Weise eine von Nutzern als optisch besonders ansprechend empfundene indirekte Beleuchtung ermöglicht.

Gemäß einer Ausgestaltung weist die Beleuchtungseinheit zumindest einen an dem Getränkeauslauf angeordneten Lichtleiter zur Lichtverteilung auf. In diesem Fall ist auch mit lediglich einer Lichtquelle oder einer geringen Anzahl von Lichtquellen eine besonders homogene Lichtverteilung ermöglicht. Es kann z.B. lediglich ein solcher Lichtleiter vorgesehen sein, es ist z.B. aber auch möglich, eine Mehrzahl von Lichtleitern vorzusehen, in die Licht von einer oder mehreren Lichtquellen eingekoppelt wird. Der/ die Lichtleiter kann/können insbesondere derart ausgebildet sein, dass an verschiedenen Stellen Licht aus diesem/n ausgekoppelt wird. Der Lichtleiter kann durch ein Kunststoffelement aus einem lichtdurchlässigen Kunststoff gebildet sein. Besonders kostengünstig kann der Lichtleiter dabei mittels eines Spritzgussverfahrens aus Kunststoff hergestellt sein.

Gemäß einer Ausgestaltung ist der zumindest eine Lichtleiter derart angeordnet, dass er den Getränkeauslauf zumindest teilweise umgibt und ein Umfang des Getränkeauslaufs zumindest abschnittsweise beleuchtet wird. In diesem Fall ist eine optisch besonders ansprechende Beleuchtung des Getränkeauslaufs ermöglicht. Der Lichtleiter kann dabei insbesondere derart angeordnet sein, dass er den gesamten Außenumfang des Getränkeauslaufs umgibt, z.B. ringförmig. Es ist z.B. aber auch möglich, den/die Leichtleiter derart anzuordnen, dass der Getränkeauslauf nur teilweise umgeben und beleuchtet wird, z.B. U-förmig eine Unterseite des Getränkeauslaufs umgeben wird. Die Lichtauskopplung aus dem Lichtleiter (bzw. den Lichtleitern) kann dabei z.B. gleichmäßig über den gesamten Umfang realisiert sein oder es kann auch eine ungleichmäßige, strukturierte Lichtauskopplung erfolgen. Z.B. kann eine Unterseite des Getränkeauslaufs stärker beleuchtet werden, um diesen Bereich optisch zu betonen.

Bevorzugt ist der Getränkeauslauf höhenverstellbar, sodass die Position des Getränkeauslaufs an unterschiedliche Höhen zu befüllender Trinkgefäße anpassbar ist. Gemäß einer Ausgestaltung ist die Beleuchtungseinheit derart angeordnet, dass sie gemeinsam mit dem Getränkeauslauf höhenverstellbar ist. In diesem Fall kann die Beleuchtungseinheit auch bei einer Höhenverstellung des Getränkeauslaufs immer eine optimierte Beleuchtungssituation bereitstellen.

Gemäß einer Ausgestaltung ist die Beleuchtungseinheit dazu ausgebildet, verschiedenfarbige Lichteffekte bereitzustellen. In diesem Fall kann die erzielte Beleuchtungssituation in einfacher Weise durch den Nutzer entsprechend seinen Vorlieben angepasst werden oder es kann z.B. je nach ausgewähltem Heißgetränk eine charakteristische Beleuchtungssituation bereitgestellt werden. Die verschiedenfarbigen Lichteffekte können z.B. durch eine Mehrzahl von LEDs, die unterschiedliche Farben emittieren, durch entsprechende Farbfilter oder in ähnlicher Weise realisiert werden.

Weitere Vorteile und Weiterbildungen ergeben sich aus der nachfolgenden Beschreibung eines Ausführungsbeispiels unter Bezugnahme auf die beiliegenden Zeichnungen.
- Fig. 1: ist eine schematische Vorderansicht einer Heißgetränkezubereitungsvorrichtung gemäß einer Ausführungsform,
- Fig. 2: ist eine schematische Seitenansicht der Heißgetränkezubereitungsvorrichtung gemäß der Ausführungsform,
- Fig. 3: ist eine schematische Vorderansicht der Heißgetränkezubereitungsvorrichtung ohne Tür und
- Fig. 4: ist eine schematische perspektivische Darstellung der Heißgetränkezubereitungsvorrichtung mit geöffneter Tür.

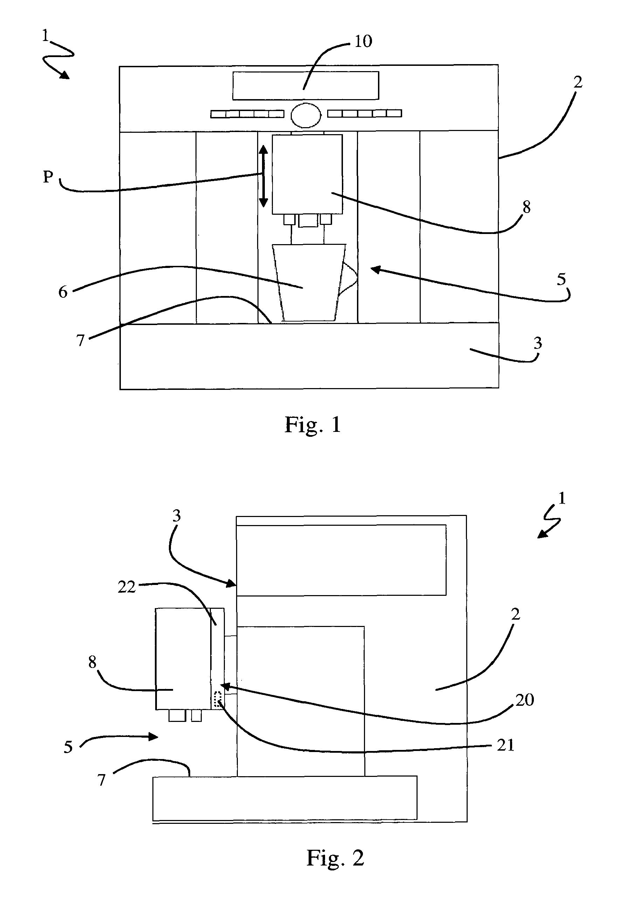

Eine Ausführungsform wird im Folgenden unter Bezug auf die Fig. 1 bis Fig. 4 beschrieben. Fig. 1 ist eine schematische Vorderansicht einer Heißgetränkezubereitungsvorrichtung 1 gemäß der Ausführungsform.

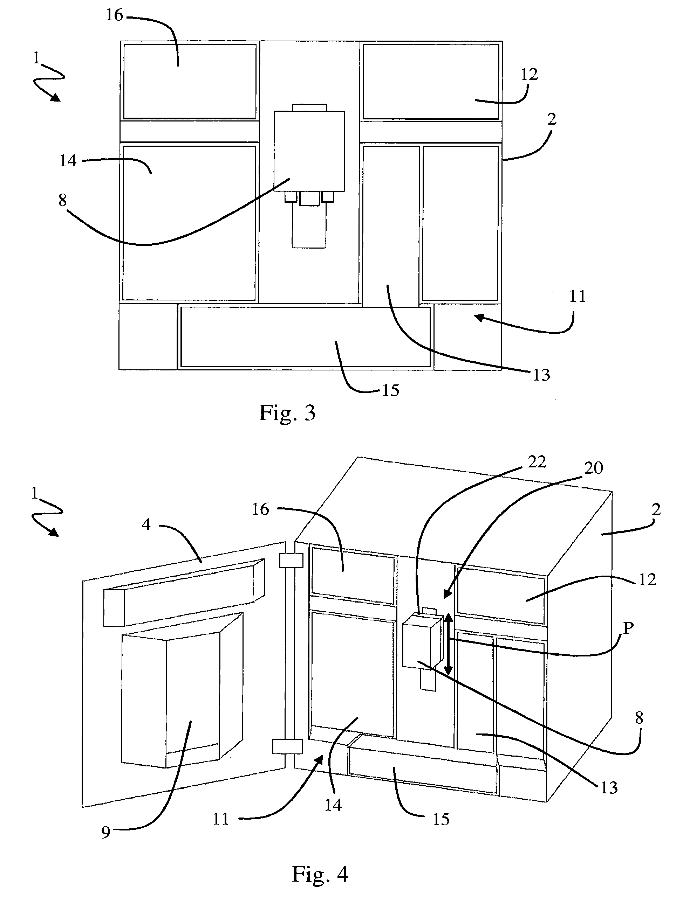

Bei der Ausführungsform ist die Heißgetränkezubereitungsvorrichtung 1 als ein Kaffeevollautomat ausgebildet. Die Heißgetränkezubereitungsvorrichtung weist ein Gehäuse 2 auf, dessen Frontseite 3 als eine Tür 4 ausgebildet ist, die geöffnet werden kann, um auf in dem Inneren des Gehäuses angeordnete Komponenten zugreifen zu können, wie insbesondere in der schematischen Darstellung von Fig. 4 zu erkennen ist. Bei dem Ausführungsbeispiel ist die Heißgetränkezubereitungsvorrichtung 1 als ein Einbaugerät ausgebildet, dass dazu vorgesehen ist, derart in z.B. einen Schrank eingebaut zu werden, dass nur die Frontseite 3 für einen Nutzer zugänglich ist.

Wie in Fig. 1 zu sehen ist, ist an der Frontseite 3 ein Ausgabebereich 5 vorgesehen. In dem Ausgabebereich 5 ist eine Abstellfläche 7 vorgesehen, die dazu ausgebildet ist, zumindest ein Trinkgefäß 6 aufzunehmen. Diese Abstellfläche 7 kann z.B. in an sich bekannter Weise als ein Tropfgitter mit Durchbrechungen bzw. Löchern ausgebildet sein, durch die gegebenenfalls verschüttete Flüssigkeiten ablaufen können. In Fig. 1 ist beispielhaft ein zu befüllendes Trinkgefäß 6 in Form einer Tasse bzw. eines Bechers dargestellt. Oberhalb der Abstellfläche 7 ist ein Getränkeauslauf 8 zum Befüllen von zumindest einem Trinkgefäß angeordnet, der derart ausgebildet ist, dass in der Heißgetränkezubereitungsvorrichtung 1 zubereitete Getränke in ein in dem Ausgabebereich 5 platziertes Trinkgefäß (bzw. mehrere dort platzierte Trinkgefäße) befüllt werden können. Der Getränkeauslauf 8 ist derart an der Heißgetränkezubereitungsvorrichtung 1 angeordnet, dass er bei einem Öffnen der als Tür 4 ausgebildeten Frontseite 3 nicht mitbewegt wird. Zu diesem Zweck ist die Frontseite 3 mit einer Durchbrechung 9 versehen, durch die der Getränkeauslauf 8 hindurchführbar ist, wie insbesondere in Fig. 4 zu sehen ist. Der Getränkeauslauf 8 ist höhenverstellbar ausgestaltet, sodass er relativ zu dem Gehäuse 2 der Heißgetränkezubereitungsvorrichtung 1 in vertikaler Richtung verstellt werden kann, wie in den Fig. 1 und Fig. 4 schematisch durch einen Doppelpfeil P dargestellt ist. In dieser Weise kann die Position des Getränkeauslaufs 8 in einfacher Weise an unterschiedlich hohe Trinkgefäße angepasst werden.

Wie in Fig. 1 dargestellt ist, ist bei dem Ausführungsbeispiel oberhalb des Ausgabebereichs 5 eine Bedienungseinheit 10 vorgesehen, über die ein Nutzer die Heißgetränkezubereitungsvorrichtung 1 betätigen kann. Die Bedienungseinheit 10 kann z.B. eine Anzeige, z.B. in Form eines Displays, und eine Mehrzahl von Eingabemitteln, die z.B. als Schalter oder Tasten ausgebildet sein können, aufweisen. Die Bedienungseinheit 10 ist derart ausgebildet, dass ein Nutzer ein zu bereitendes Heißgetränk auswählen und gegebenenfalls auf weitere Funktionen der Heißgetränkezubereitungsvorrichtung 1 zugreifen kann.

In dem Inneren des Gehäuses 2 der Heißgetränkezubereitungsvorrichtung 1 ist ein Wartungsbereich 11 vorgesehen, auf den ein Nutzer in regelmäßigen oder unregelmäßigen Abständen zugreifen muss, um z.B. Verbrauchsmittel wieder aufzufüllen und zu entsorgende Stoffe von der Heißgetränkezubereitungsvorrichtung 1 zu entnehmen. Bei dem dargestellten Ausführungsbeispiel weist der Wartungsbereich 11 z.B. einen Bohnenbehälter 12 zur Aufnahme von Kaffeebohnen, einen Tresterbehälter 13 zur Aufnahme verbrauchten gemahlenen Kaffeepulvers, einen Wassertank 14 zur Aufnahme von als Verbrauchsmittel dienendem Wasser, eine Tropfschale 15 zur Aufnahme von verschütteten Flüssigkeiten und einen Zubehörbehälter 16 zur Aufnahme von Zubehör der Heißgetränkezubereitungsvorrichtung 1 auf.

Die Heißgetränkezubereitungsvorrichtung 1 weist eine Beleuchtungseinheit 20 zur Beleuchtung des Ausgabebereichs 5 auf, die im Folgenden eingehender beschrieben wird. Die Beleuchtungseinheit 20 ist an dem Getränkeauslauf 8 an einer dem Gehäuse 2 zugewandten Rückseite angebracht. Die Beleuchtungseinheit 20 weist eine Lichtquelle 21 und zumindest einen Lichtleiter 22 zur Verteilung des von der Lichtquelle 21 bereitgestellten Lichts auf. Bei dem Ausführungsbeispiel weist die Lichtquelle 21 zumindest eine LED (lichtemittierende Diode; light emitting diode) auf, die auf der Rückseite des Getränkeauslaufs 8 unten in der Mitte angeordnet ist, wie in Fig. 2 schematisch dargestellt ist. Bevorzugt kann die Lichtquelle 21 dabei zumindest zwei LEDs aufweisen, die z.B. auf einer gemeinsamen Platine angeordnet sein können und die derart angeordnet sind, dass sie Licht in entgegengesetzten horizontalen Richtungen abstrahlen. In diesem Fall ist eine kompakte und kostengünstige Ausgestaltung gegeben, die eine besonders homogene Beleuchtung ermöglicht. Der Lichtleiter 22 ist derart angeordnet, dass das Licht von der Lichtquelle 21 möglichst vollständig in den Lichtleiter 22 eingekoppelt wird. Bei dem Ausführungsbeispiel erstreckt sich der Lichtleiter 22 entlang der gesamten Außenkontur an der Rückseite des Getränkeauslaufs 8. Der Lichtleiter 22 ist dabei derart ausgebildet, dass entlang der Außenkontur an der Rückseite des Getränkeauslaufs 8 Licht zur Beleuchtung des Ausgabebereichs 5 emittiert wird. Zumindest ein Teil des Lichts wird dabei in Richtung des Gehäuses 2 emittiert. Die Beleuchtungseinheit 20 kann dabei derart angeordnet sein, dass insbesondere in einem unteren Bereich vermehrt Licht abgestrahlt wird, um ein auf der Abstellfläche 7 abgestelltes Trinkgefäß optimal zu beleuchten. Der Lichtleiter 22 ist bei dem Ausführungsbeispiel aus einem transparenten Kunststoff gefertigt und kann insbesondere durch Spritzguss in der gewünschten Form ausgebildet sein. Obwohl bei der Ausführungsform ein einteiliger Lichtleiter 22 verwendet ist, der sich entlang der gesamten Außenkontur erstreckt, sind auch abweichende Ausgestaltungen möglich. Insbesondere können auch mehrere separat ausgebildete Lichtleiter oder ein mehrteiliger Lichtleiter zum Einsatz kommen. Ferner ist es auch möglich, dass der Lichtleiter 22 nicht entlang der gesamten Außenkontur verläuft. Es ist z.B. möglich, dass der Lichtleiter 22 (bzw. mehrere Lichtleiter) lediglich U-förmig in dem unteren Bereich und zumindest teilweise entlang der Seiten der Außenkontur an der Rückseite des Getränkeauslaufs 8 ausgebildet ist.

Der Lichtleiter 22 kann dabei z.B. derart angeordnet sein, dass er für einen Nutzer bei der Bedienung der Heißgetränkezubereitungsvorrichtung 1 sichtbar ist, oder aber auch derart, dass er für einen Nutzer bei der Bedienung der Heißgetränkezubereitungsvorrichtung 1 nicht direkt sichtbar ist und der Nutzer nur das von dem Lichtleiter 22 emittierte Licht sehen kann, mit dem der Ausgabebereich 5 beleuchtet wird. Die Beleuchtungseinheit 20 ist derart an dem Getränkeauslauf 8 angeordnet, dass die Beleuchtungseinheit 20 bei einer Höhenverstellung des Getränkeauslaufs 8, die schematisch durch den Pfeil P dargestellt ist, gemeinsam mit dem Getränkeauslauf 8 bewegt wird. In dieser Weise ist es in einfacher Weise ermöglicht, dass die Beleuchtungssituation jeweils auf die Höhe des verwendeten Trinkgefäßes angepasst ist.

Die Beleuchtungseinheit 20 ist derart angeordnet und strahlt Licht derart ab, dass in einem Zustand, in dem die Tür 4 geöffnet ist, wie in den Fig. 3 und Fig. 4 schematisch dargestellt ist, der im Inneren des Gehäuses 2 angeordnete Wartungsbereich 11 beleuchtet wird. Der Lichtleiter 22 ist dabei derart ausgebildet, dass ausreichend Licht in Richtung des Wartungsbereichs 11 ausgekoppelt wird. In dieser Weise ist erreicht, dass auch unter ungünstigen Umgebungslichtbedingungen eine Vornahme von Wartungstätigkeiten problemlos ermöglicht ist, der Nutzer insbesondere Kaffeebohnen, Wasser und ggfs. Milch nachfüllen kann und den Tresterbehälter 13 und die Tropfschale 15 leeren kann. Bei dem Öffnen der Tür 4 schwenkt bei dem Ausführungsbeispiel die gesamte Frontseite 3 nach vorne und gibt den Wartungsbereich 11 frei, wobei der Getränkeauslauf 8 in seiner Position unverändert bleibt, wie in Fig. 4 schematisch dargestellt ist. Obwohl bei der Ausführungsform die gesamte Frontseite 3 als Tür 4 ausgebildet ist, sind auch Abwandlungen möglich, z.B. bei denen nur ein Bereich der Frontseite 3 als Tür 4 ausgebildet ist.

Gemäß einer Weiterbildung der Ausführungsform ist die Beleuchtungseinheit 20 dazu ausgebildet, verschiedenfarbige Lichteffekte bereitzustellen. Bei der Weiterbildung weist die Lichtquelle 21 dabei eine Mehrzahl von LEDs auf, die dazu ausgebildet sind, verschiedenfarbiges Licht zu emittieren. In dieser Weise ist es ermöglicht, verschiedenfarbige Beleuchtungssituationen bereitzustellen. Dabei kann die Heißgetränkezubereitungsvorrichtung 1 z.B. derart ausgebildet sein, dass ein Nutzer die Beleuchtungsfarbe selbst einstellen kann, oder es können verschiedenen zuzubereitenden Heißgetränken unterschiedliche Beleuchtungsfarben zugeordnet sein.

## Patentansprüche

1. Heißgetränkezubereitungsvorrichtung (1) mit:
einem Gehäuse (2),
einem Ausgabereich (5), der einen Getränkeauslauf (8) zum Befüllen von zumindest einem Trinkgefäß aufweist,
zumindest einer an dem Gehäuse (2) angeordneten Tür (4),
einem in dem Gehäuse (2) hinter der Tür (4) angeordneten Wartungsbereich (11), und
einer Beleuchtungseinheit (20), die derart angeordnet ist, dass sie bei geschlossener Tür (4) den Ausgabebereich (5) und bei geöffneter Tür (4) den Wartungsbereich (11) beleuchtet,
**dadurch gekennzeichnet, dass** die Tür (4) geöffnet werden kann, ohne den Getränkeauslauf (8) mitzubewegen, und dass die Beleuchtungseinheit (20) an dem Getränkeauslauf (8) angeordnet ist.

2. Heißgetränkezubereitungsvorrichtung nach Anspruch 1, **dadurch gekennzeichnet, dass** die Beleuchtungseinheit (20) eine an dem Getränkeauslauf (8) angeordnete Lichtquelle (21) aufweist.

3. Heißgetränkezubereitungsvorrichtung nach Anspruch 2, **dadurch gekennzeichnet, dass** die Lichtquelle (21) zumindest eine LED aufweist.

4. Heißgetränkezubereitungsvorrichtung nach Anspruch 2 oder 3, **dadurch gekennzeichnet, dass** die Lichtquelle (21) zumindest zwei LEDs aufweist, die derart angeordnet sind, dass sie in entgegengesetzten Richtungen abstrahlen.

5. Heißgetränkezubereitungsvorrichtung nach einem der Ansprüche 2 bis 4, **dadurch gekennzeichnet, dass** die Lichtquelle (21) derart angeordnet ist, dass sie für einen die Heißgetränkezubereitungsvorrichtung (1) bedienenden Nutzer nicht unmittelbar sichtbar ist.

6. Heißgetränkezubereitungsvorrichtung nach einem der vorangehenden Ansprüche, **dadurch gekennzeichnet, dass** die Beleuchtungseinheit (20) an einer dem Gehäuse (2) zugewandten Rückseite an dem Getränkeauslauf (8) angebracht ist.

7. Heißgetränkezubereitungsvorrichtung nach einem der vorangehenden Ansprüche, **dadurch gekennzeichnet, dass** die Beleuchtungseinheit (20) zumindest einen an dem Getränkeauslauf (8) angeordneten Lichtleiter (22) zur Lichtverteilung aufweist.

8. Heißgetränkezubereitungsvorrichtung nach Anspruch 6 oder 7, **dadurch gekennzeichnet, dass** der zumindest eine Lichtleiter (22) derart angeordnet ist, dass er den Getränkeauslauf (8) zumindest teilweise umgibt und ein Umfang des Getränkeauslaufs (8) zumindest abschnittsweise beleuchtet wird.

9. Heißgetränkezubereitungsvorrichtung nach einem der vorangehenden Ansprüche mit einem höhenverstellbaren Getränkeauslauf (8), **dadurch gekennzeichnet, dass** die Beleuchtungseinheit (20) derart angeordnet ist, dass sie gemeinsam mit dem Getränkeauslauf (8) höhenverstellbar ist.

10. Heißgetränkezubereitungsvorrichtung nach einem der vorangehenden Ansprüche, **dadurch gekennzeichnet dass** die Beleuchtungseinheit (20) dazu ausgebildet ist, verschiedenfarbige Lichteffekte bereitzustellen.

## Claims

1. Hot beverage preparation device (1) with:
a housing (2),
an outlet area (5), which has a beverage outlet (8) for filling at least one drinking vessel,
at least one door (4) disposed on the housing (2),
a maintenance area (11) disposed in the housing (2) behind the door (4),
and
an illumination unit (20), which is disposed such that, when the door (4) is closed, it illuminates the outlet area (5) and when the door (4) is open it illuminates the maintenance area (11),
**characterised in that** the door (4) can be opened without moving the beverage outlet (8) at the same time and that the illumination unit (20) is disposed on the beverage outlet (8).

2. Hot beverage preparation device according to claim 1, **characterised in that** the illumination unit (20) has a light source (21) disposed on the beverage outlet (8).

3. Hot beverage preparation device according to claim 2, **characterised in that** the light source (21) has at least one LED.

4. Hot beverage preparation device according to claim 2 or 3, **characterised in that** the light source (21) has at least two LEDs which are disposed such that they emit light in opposing directions.

5. Hot beverage preparation device according to one of claims 2 to 4, **characterised in that** the light source (21) is disposed such that it is not directly visible for a user operating the hot beverage preparation device (1).

6. Hot beverage preparation device according to one of the preceding claims, **characterised in that** the illumination unit (20) is attached to a rear side facing towards the housing (2) on the beverage outlet (8).

7. Hot beverage preparation device according to one of the preceding claims, **characterised in that** the illumination unit (20) has at least one optical waveguide (22) disposed on the beverage outlet (8) for light distribution.

8. Hot beverage preparation device according to claim 6 or 7, **characterised in that** the at least one optical waveguide (22) is disposed such that it at least partly surrounds the beverage outlet (8) and a circumference of the beverage outlet (8) is at least illuminated in sections.

9. Hot beverage preparation device according to one of the preceding claims, with a height-adjustable beverage outlet (8), **characterised in that** the illumination unit (20) is disposed such that its height is able to be adjusted together with that of the beverage outlet (8).

10. Hot beverage preparation device according to one of the preceding claims, **characterised in that** the illumination unit (20) is embodied to provide a different-coloured light effects.

## Revendications

1. Dispositif de préparation de boissons chaudes (1) comprenant :
un boîtier (2),
une zone de distribution (5) qui présente une sortie de boisson (8) servant au remplissage d'au moins un récipient pour boissons,
au moins une porte (4) disposée sur le boîtier (2),
une zone de maintenance (11) disposée derrière la porte (4) dans le boîtier (2), et
une unité d'éclairage (20) qui est agencée de manière telle, qu'elle éclaire la zone de distribution (5) quand la porte (4) est fermée, et éclaire la zone de maintenance (11) quand la porte (4) est ouverte,
**caractérisé en ce que** la porte (4) peut être ouverte sans entraîner la sortie de boisson (8), et **en ce que** l'unité d'éclairage (20) est disposée à la sortie de boisson (8).

2. Dispositif de préparation de boissons chaudes selon la revendication 1, **caractérisé en ce que** l'unité d'éclairage (20) présente une source de lumière (21) disposée à la sortie de boisson (8).

3. Dispositif de préparation de boissons chaudes selon la revendication 2, **caractérisé en ce que** la source de lumière (21) présente au moins une LED.

4. Dispositif de préparation de boissons chaudes selon la revendication 2 ou 3, **caractérisé en ce que** la source de lumière (21) présente au moins deux LEDs qui sont disposées de manière telle, qu'elles diffusent dans des directions opposées.

5. Dispositif de préparation de boissons chaudes selon l'une quelconque des revendications 2 à 4, **caractérisé en ce que** la source de lumière (21) est disposée de manière telle, qu'elle ne soit pas directement visible pour un utilisateur se servant du dispositif de préparation de boisson chaudes (1).

6. Dispositif de préparation de boissons chaudes selon l'une quelconque des revendications précédentes, **caractérisé en ce que** l'unité d'éclairage (20) est fixée, à la sortie de boisson (8), sur une face arrière tournée vers le boîtier (2).

7. Dispositif de préparation de boissons chaudes selon l'une quelconque des revendications précédentes, **caractérisé en ce que** l'unité d'éclairage (20) présente au moins un guide de lumière (22) servant à la diffusion de lumière et disposé à la sortie de boisson (8).

8. Dispositif de préparation de boissons chaudes selon la revendication 6 ou 7, **caractérisé en ce que** l'au moins un guide de lumière (22) est disposé de manière telle, qu'il entoure au moins partiellement la sortie de boisson (8), et un pourtour de la sortie de boisson (8) est au moins partiellement éclairé.

9. Dispositif de préparation de boissons chaudes selon l'une quelconque des revendications précédentes comprenant une sortie de boisson (8) réglable en hauteur, **caractérisé en ce que** l'unité d'éclairage (20) est disposée de manière telle, qu'elle soit réglable en hauteur conjointement avec la sortie de boisson (8).

10. Dispositif de préparation de boissons chaudes selon l'une quelconque des revendications précédentes, **caractérisé en ce que** l'unité d'éclairage (20) est conçue dans le but de fournir des effets de lumière de couleurs différentes.
